**Europäisches Patentamt**

**European Patent Office**

**Office européen des brevets**

(19)

(11) Numéro de publication: **0 091 848**
**B1**

# FASCICULE DE BREVET EUROPEEN

(12)

(45) Date de publication du fascicule du brevet:
**17.09.86**

(21) Numéro de dépôt: **83400580.3**

(22) Date de dépôt: **21.03.83**

(51) Int. Cl.⁴: **B 64 C 13/12,** G 05 G 11/00

(54) **Manche de commande débrayable pour copilote d'aéronef.**

(30) Priorité: **07.04.82 FR 8206083**

(43) Date de publication de la demande:
**19.10.83 Bulletin 83/42**

(45) Mention de la délivrance du brevet:
**17.09.86 Bulletin 86/38**

(84) Etats contractants désignés:
**DE GB IT**

(56) Documents cités:
**FR - A - 2 159 161**
**FR - A - 2 449 924**

(73) Titulaire: **AEROSPATIALE Société Nationale Industrielle,**
**37 boulevard de Montmorency, F-75781 Paris**
**Cédex 16 (FR)**

(72) Inventeur: **Barnoin, Pierre, "Les Blanoirs" route**
**départementale 18, F-13510 Eguilles (FR)**
Inventeur: **Cas, Jacques Marius, 1 rue du petit chantier,**
**F-13007 Marseille (FR)**

(74) Mandataire: **Barnay, André François, Cabinet**
**Barnay 80 rue Saint-Lazare, F-75009 Paris (FR)**

ACTORUM AG

## Description

L'invention se rapporte à un manche de commande pour copilote d'aéronef (tel qu'un hélicoptère) relié au manche de pilote par une timonerie d'accouplement qui oblige les deux manches à rester parallèles lorsqu'ils se déplacent angulairement autour d'un centre de pivotement propre à chacun d'eux et qui comprend deux tiges parallèles articulées formant avec les axes longitudinaux des manches un parallélogramme déformable, l'une de ces tiges, dont les points d'articulation sont confondus avec les centres de pivotement des manches, étant un arbre rigide en torsion pouvant tourner dans des paliers, l'autre tige étant une bielle travaillant à la traction ou à la compression.

Sur les aéronefs à double commande comportant un manche de pilote et un manche de copilote, il peut être gênant, et même dans certains cas dangereux, que, lorsque le copilote n'assure pas la conduite de l'appareil et qu'il est occupé à d'autres tâches, par exemple à la recherche d'objectifs ou à la navigation, le manche de commande placé devant lui ne puisse être totalement débrayé de la timonerie principale, de façon à éviter des à-coups dans la conduite de l'appareil, si cette commande, en général très sensible, est déplacée involontairement par le copilote.

La présente invention concerne un manche de copilote doté d'un dispositif mécanique de débrayage et d'embrayage instantané qui évite son déplacement intempestif tout en laissant la possibilité au pilote d'intervenir à tout instant suivant les besoins de la mission.

A cet effet, selon l'invention, entre les tiges de la timonerie d'accouplement précitée et le manche de copilote est interposé un double cardan comprenant un anneau externe et un anneau interne dont les deux axes d'articulation se croisent au centre de pivotement dudit manche de copilote, son anneau externe d'une part étant articulé à l'arbre précité et d'autre part étant solidaire d'une pièce articulée à la bielle précitée, tandis que ledit manche de copilote est relié à ladite pièce par un dispositif de verrouillage effaçable qui permet de solidariser et de désolidariser à volonté le manche de copilote et l'anneau externe du double cardan. Lorsqu'il y a solidarisation, le manche de copilote est couplé au manche de pilote et permet de commander normalement l'appareil. Lorsqu'on désolidarise le manche de copilote dudit anneau externe, le double cardan isole complètement du manche de pilote ce manche, qui est ainsi mis hors service, la timonerie ne pouvant alors fonctionner que sous la seule sollicitation du manche de pilote.

Dans une forme d'exécution avantageuse, le dispositif de verrouillage du manche de copilote comprend un pêne émergeant coaxialement du manche à son extrémité et s'engageant, pour assurer le verrouillage, dans une gâche qu'offre le fond d'une partie en forme de cuvette appartenant à ladite pièce solidaire de l'anneau externe, tandis que le manche de copilote peut coulisser longitudinalement dans le double cardan, le déverrouillage s'obtenant par traction sur le manche de copilote de manière à faire sortir le pêne de la gâche.

Il est préférable de prévoir que le manche de copilote, en situation de déverrouillage, puisse être immobilisé au moyen d'un dispositif d'accrochage à un point fixe de la structure de l'appareil. Un tel dispositif d'accrochage peut comprendre un crochet solidaire du manche de copilote et un organe d'ancrage fixe avec lequel il est possible d'amener en prise le crochet. De préférence, le manche de copilote selon l'invention est doté d'un ressort de rappel qui lui communique une force élastique de maintien soit en situation de verrouillage, soit en position d'accrochage après déverouillage. En outre, il est avantageux que la cuvette appartenant à ladite pièce solidaire de l'anneau externe offre intérieurement une forme tronconique et que le manche comporte à son extrémité un embout de forme conjuguée qui s'emboîte exactement dans le fond de cette cuvette. Par ailleurs, il convient que le pêne de verrouillage soit mobile et puisse s'effacer dans le manche de copilote par enfoncement à l'encontre de la force d'un ressort de rappel tendant à le faire émerger de l'extrémité du manche de copilote.

La description qui va suivre, en regard des dessins annexés à titre d'exemple non limitatif, permettra de bien comprendre comment la présente invention peut être mise en pratique.

La figure 1 représente en élévation un agencement de double commande pour aéronef, le manche de copilote étant montré en coupe longitudinale.

La figure 2 représente une coupe selon la ligne II-II de l'objet de la figure 1.

La figure 3 représente une coupe suivant la ligne III-III de l'objet de la figure 1 montrant le manche de copilote verrouillé en situation d'activité.

La figure 4 représente, à la manière de la figure 3, le manche de copilote déverrouillé et immobilisé en situation hors service.

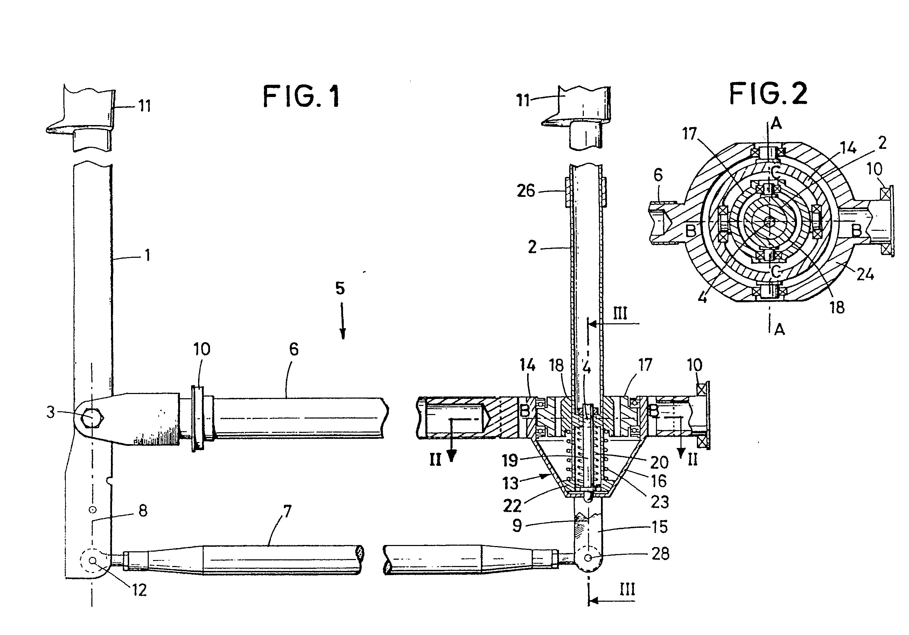

On voit sur la figure 1 un agencement de commande cyclique de rotor d'un hélicoptère, comprenant un manche 1 destiné au pilote de l'appareil et un manche 2 destiné au copilote. Lors de leur utilisation où ils sont déplacés angulairement, par manœuvre de leurs poignées 11 respectives, en roulis ou en tangage autour de centres de pivotement 3, 4 respectifs, ces manches 1, 2 sont astreints à rester en parallélisme grâce à une timonerie d'accouplement 5. Cette timonerie comprend un arbre 6 de conjugaison en tangage et une bielle 7 de conjugaison en roulis qui forment avec les axes 8, 9 des manches 1, 2 un parallélogramme déformable.

L'arbre 6, qui est rigide en torsion et peut tourner dans des paliers 10 fixes, est articulé au manche 1 suivant un axe passant par le centre de pivotement 3 de celui-ci, et la bielle 7 est articulée en 12 à l'extrémité inférieure dudit manche.

A leur autre extrémité, par contre, il y a articulation de l'arbre 6 et de la bielle 7 non pas directement au manche de copilote 2, mais à une pièce intermédiaire 13 comprenant à sa partie supérieure un anneau de cardan 14 auquel est articulé suivant un axe AA (figur 2) l'arbre 6 par un anneau 24 solidaire de ce dernier, et à sa partie inférieure une fourche 15 à laquelle est articulée en 28 la bielle 7, l'anneau 14 et la fourche 15 étant réunis par une partie 16 en forme de cuvette tronconique.

L'anneau 14 est relié au manche 2 par un anneau de cardan 17 qui est articulé à l'anneau 14 suivant un axe BB et à un anneau 18 ceinturant le manche 2 suivant un axe CC perpendiculaire à l'axe BB. Les anneaux 24, 14, 17 et 18 sont concentriques et les axes AA, BB et CC passent tous par le centre de pivotement 4 du manche 2.

Ainsi, le manche 2 n'est pas articulé directement à l'arbre 6, mais par l'intermédiaire d'un double cardan dont l'anneau externe est l'anneau 14 et l'anneau interne l'anneau 17, les axes CC et AA étant distincts. Toutefois, en fonctionnement normal, ces deux axes sont astreints à être confondus par solidarisation du manche 2 et de son anneau 18 avec la pièce 13 et son anneau 14. Cette situation est obtenue grâce à un dispositif de verrouillage constitué par un pêne 19 coulissant coaxialement à l'intérieur du manche 2 et pouvant émerger de l'extrémité de celui-ci, sous l'action d'un ressort de compression 20, pour s'engager dans une gâche formée par un trou 21 percé au centre du fond de la cuvette 16 de la pièce 13. Par ailleurs, le manche 2 est monté coulissant dans l'anneau 18, son extrémité, munie d'un embout 22 dont la forme épouse celle du fond de la cuvette 16, étant appliquée contre celui-ci par un ressort de rappel 23 interposé entre l'anneau 18 et ledit embout 22.

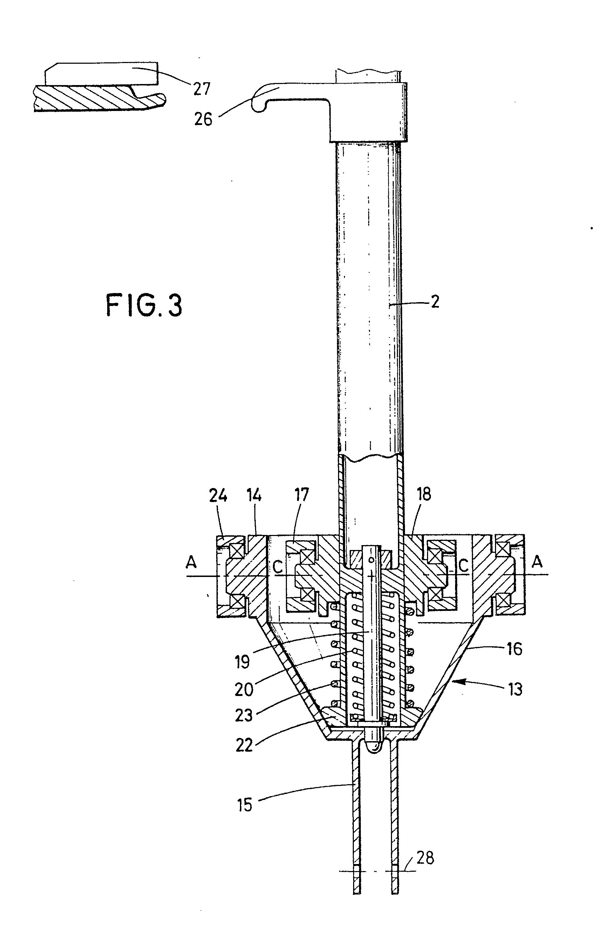

Lorsque le manche 2 et la pièce 13 sont en situation de verrouillage mutuel (figures 1 et 3), les axes AA et CC sont nécesairement confondus, les articulations de l'anneau 17 étant inopérantes. Le manche 2 se trouve alors articulé à l'arbre 6 et à la bielle 7 comme l'est le manche 1. Les deux manches sont couplés et chacun d'eux peut être utilisé indifféremment pour commander l'hélicoptère.

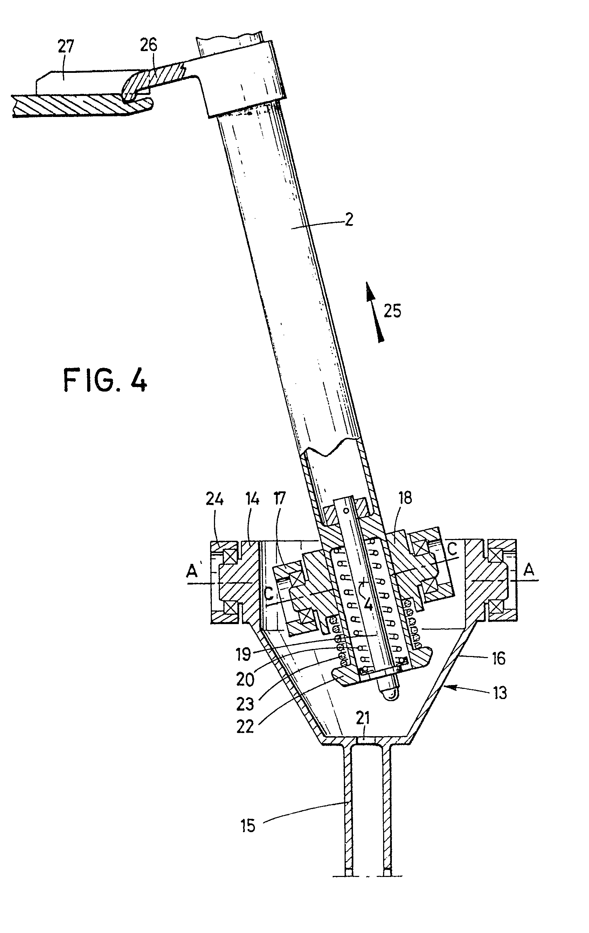

Lorsque le copilote ne désire pas se servir de son manche 2, il tire celui-ci vers haut suivant la flèche 25 (figure 4), ce qui a pour effet, par coulissement du manche 2 dans l'anneau 18, de faire sortir le pêne 19 de la gâche 21, l'embout 22 quittant le fond de la cuvette 16. Le manche 2 se trouve ainsi débrayé, c'est-à-dire désaccouplé du manche 1, qui seul permet alors la commande de l'hélicoptère, tandis que l'arbre 6 et la bielle 7 peuvent débattre librement en entraînant la pièce 13, mais non le manche 2 qui en est isolé par le double cardan 14, 17.

Il convient ensuite d'immmobiliser le manche 2 en situation de déverrouillage, ce qui est réalisé dans le présent exemple à l'aide d'un dispositif d'accrochage comprenant un crochet 26 fixé audit manche à une certaine hauteur de son fût et un organe d'ancrage 27 fixe. Le copilote incline le manche 2 vers l'avant pour mettre en prise son crochet 26 avec l'organe 27. Le ressort de rappel 23, ayant été comprimé lors de la traction du manche vers le haut, assure dès lors le maintien du manche accroché à l'organe 27.

Lorsque le copilote désire reprendre l'usage du manche 2, il lui suffit de le tirer vers lui. Le crochet 26 échappe à l'organe 27 et le ressort 23 se détend en entraînant vers le bas le manche, dont l'embout 22 assure un centrage automatique dans la pièce 13, tandis que le pêne 19, venant en contact avec la paroi de la cuvette 16, se rétracte en comprimant légèrement son ressort 20 jusqu'à ce qu'il vienne en regard de la gâche 21, ledit ressort se détendant alors en le poussant dans celle-ci. Le manche 2 est ainsi de nouveau verrouillé et remis en situation d'activité. Les manches 1 et 2 sont couplés et la timonerie 5 fonctionne lorsque l'un ou l'autre manche est solicité.

**Revendications**

1. Manche de commande pour copilote (2) d'aéronef relié au manche de pilote (1) par une timonerie d'accouplement (5) qui oblige les deux manches à rester parallèles lorsqu'ils se déplacent angulairement autour d'un centre de pivotement propre à chacun d'eux et qui comprend deux tiges (6, 7) parallèles articulées formant avec les axes longitudinaux des manches un parallélogramme déformable, l'une de ces tiges, dont les points d'articulation sont confondus avec les centres de pivotement des manches, étant un arbre (6) rigide en torsion pouvant tourner dans des paliers, l'autre tige étant une bielle (7) travaillant à la traction ou à la compression, ce manche de copilote étant caractérisé par le fait qu'entre les tiges (6, 7) de la timonerie d'accouplement (5) et le manche de copilote (2) lui-même est interposé un double cardan comprenant un anneau externe (14) et un anneau interne (17) dont les deux axes d'articulation (BB, CC) se croisent au centre de pivotement (4) dudit manche de copilote, son anneau externe (14) d'une part étant articulé audit arbre (6) et d'autre part étant solidaire d'une pièce (13) articulée à ladite bielle (7), et que le manche de copilote (2) est relié à ladite pièce (13) par un dispositif de verrouillage effaçable qui permet de solidariser et de désolidariser à volonté le manche de copilote (2) et l'anneau externe (14) du double cardan.

2. Manche de copilote selon la revendication 1, caractérisé par le fait que le dispositif de verrouillage comprend un pêne (19) émergeant coaxialement du manche de copilote (2) à son extrémité et s'engageant, pour assurer le verrouillage, dans une gâche (21) qu'offre le fond d'une partie en forme de cuvette (16) appartenant à ladite pièce (13) solidaire de l'anneau externe (14), et que le manche de copilote (2) peut coulisser longitudinalement dans le double cardan (14, 17), le déverrouillage s'obtenant par traction sur le manche de copilote (2) de manière à faire sortir le pêne (19) de la gâche (21).

3. Manche de copilote selon la revendication 1 ou 2, caractérisé par le fait que, en situation de déverrouillage, il peut être immobilisé au moyen d'un dispositif d'accrochage à un point fixe de la structure de l'appareil.

4. Manche de copilote selon la revendication 3, caractérisé par le fait que le dispositif d'accrochage comprend un crochet (26) solidaire du manche de copilote (2) et un organe d'ancrage (27) fixe avec lequel le crochet (26) peut être amené en prise.

5. Manche de copilote selon la revendication 3 ou 4, caractérisé par le fait qu'il est doté d'un ressort de rappel (23) qui lui communique une force élastique de maintien soit en situation de verrouillage, soit en position d'accrochage après déverrouillage.

6. Manche de copilote selon l'une quelconque des revendications 2 à 5, caractérisé par le fait que la cuvette (16) appartenant à ladite pièce (13) solidaire de l'anneau externe (14) offre intérieurement une forme tronconique et que le manche de copilote (2) comporte à son extrémité un embout (22) de forme conjuguée qui s'emboîte exactement dans le fond de cette cuvette (16).

7. Manche de copilote selon l'une quelconque des revendications 2 à 6, caractérisé par le fait que le pêne (19) est mobile et peut s'effacer dans le manche de copilote (2) par enfoncement à l'encontre de la force d'une ressort de rappel (20).

## Claims

1. Control stick (2) for an aircraft copilot which is connected to the pilot's stick (1) by a steerage coupling (5) which requires the two sticks to remain parallel when they are displaced angularly about respective centres of pivotation and which comprises two parallel shafts (6, 7) connected by joints to the sticks to form with the longitudinal axes of the sticks a deformable parallelogram, one of said shafts, whose joint connections are coincident with the centres of pivotation of the sticks, being a rod (6) which is stiff under torsion and which can rotate in bearing means, the other of said shafts being a connecting rod (7) working in tension or compression, the co-pilot's stick being characterised by the fact that between the shafts (6, 7) of the steerage coupling (5) and the co-pilot's stick (2) itself there is a double universal joint comprising an outer ring (14) and an inner ring (17) whose two axes of articulation (BB, CC) cross at the centre of pivotation (4) of said co-pilot's stick, its outer ring (14) on the one hand being jointed to said rod (6) and on the other hand being one with an element (13) jointed to the said connecting rod (7), and in that the co-pilot's stick (2) is connected to said element (13) by a suppressible locking device which permits the co-pilot's stick (2) and the outer ring (14) of the double universal joint to be interlocked and disengaged at will.

2. Co-pilot's stick (2) according to claim 1, characterised in that the locking device comprises a bolt (19) projecting coaxially from the end of the co-pilot's stick (2) and, to ensure the locking, engageable in a keeper (21) at the base of an element in the form of a cup (16) which is part of the said element (13) which is one with the outer ring (14), and in that the co-pilot's stick (2) can slide longitudinally in the double universal joint (14, 17), disengagement being achieved by pulling on the co-pilot's stick (2) in such a manner as to draw the bolt (19) from the keeper (21).

3. Co-pilot's stick (2) according to claim 1 or 2, characterised in that, in the disengaged position, it can be immobilised by means of a latching devise engageable with a fixed part of the structure of the apparatus.

4. Co-pilot's stick (2) according to claim 3, characterised in that the latching device comprises a hook (26) which is unitary with the co-pilot's stick (2) and a fixed anchoring member (27) with which the hook (26) can be brought into engagement.

5. Co-pilot's stick (2) according to claim 3 or 4, characterised in that it is provided with a restoring spring (23) which imparts to the stick an elastic biassing force whether in the interlocked position or in the latched position after disengagement.

6. Co-pilot's stick (2) according to any one of claims 2 to 5, characterised in that the cup (16) which is part of the said element (13) which is one with the outer ring (14) has a frusto-conical internal shape and in that the co-pilot's stick (2) carries at its end a ferrule (22) of matching shape which seats accurately in the bottom of said cup (16).

7. Co-pilot's stick (2) according to any one of claims 2 to 6, characterised in that the bolt (19) is movable and can be rendered ineffective in the co-pilot's stick (2) by being pushed in in opposition to the force of a restoring spring (20).

## Patentansprüche

1. Steuerknüppel (2) für Flugzeugkopilot, der mit dem Steuerknüppel (1) des Piloten durch ein Kupplungsgestänge (5) verbunden ist, welches die beiden Steuerknüppel zwingt, parallel zu bleiben, sobald sie sich im Winkel um einen für jeden von ihnen eigenen Schwenkmittelpunkt verschwenken, und welches aus zwei mit den Längsachsen der Steuerknüppel ein verformbares Parallelogramm bildenden parallelen Gelenkstangen (6, 7) besteht, wobei die eine dieser Stangen, deren Gelenkpunkte mit den Schwenkmittelpunkten der Steuerknüppel zusammenfallen, eine in Lagern drehbare torsionssteife Welle (7) und die andere Stange ein auf Zug oder Druck arbeitender Lenker (6) ist, dadurch gekennzeichnet, dass zwischen die Stangen (6, 7) des Kupplungsgestänges (5) und dem Steuerknüppel (2) selbst des Kopiloten ein aus einem Aussenring (14) und einem Innenring (17) bestehender Doppelkardan zwischengeschaltet ist, dessen beide Gelenkachsen (BB, CC) sich im Schwenkmittelpunkt (4) des Steuerknüppels des Kopiloten kreuzen, wobei sein Aussenring (14) einerseits am Lenker (6) angelenkt ist und andererseits mit einem an der Welle (7) angelenkten Teil (13) fest verbunden ist, und dass der Steuerknüppel des Kopiloten mit diesem Teil (13) durch eine ausrückbare Verriegelungseinrichtung verbunden ist, welche wahlweise eine feste Verbindung sowie eine Trennung des Steuerknüppels (2) des Kopiloten mit dem bzw. vom Aussenring (14) des Doppelkardans erlaubt.

2. Steuerknüppel (2) für Kopilot gemäss Anspruch 1, dadurch gekennzeichnet, dass die Verriegelungseinrichtung aus einem koaxial aus dem Steuerknüppel (2) des Kopiloten an dessen Ende herausragenden Riegel (19) besteht, welcher zwecks Verriegelung in eine Schliesskappe (21) einrastet, welche im Boden eines schalenförmigen Teiles (16) des fest mit dem Aussenring (14) verbundenen Teiles (13) ausgebildet ist, und dass der Steuerknüppel (2) des Kopiloten in Längsrichtung im Doppelkardan (14, 17) gleiten kann, wobei die Entriegelung durch Zug am Steuerknüppel (2) des Kopiloten erzielbar ist, wobei der Riegel (19) aus der Schliesskappe (21) ausrastet.

3. Steuerknüppel (2) für Kopilot gemäss Anspruch 1 oder 2, dadurch gekennzeichnet, dass er in entriegeltem Zustand mittels einer Sperreinrichtung an einem festen Punkt des Flugzeuges festsetzbar ist.

4. Steuerknüppel (2) für Kopilot gemäss Anspruch 3, dadurch gekennzeichnet, dass die Sperreinrichtung aus einem fest mit dem Steuerknüppel (2) des Kopiloten verbundenen Haken (26) und einem feststehenden Verankerungsorgan (27) besteht, mit welchem der Haken (26) in Eingriff bringbar ist.

5. Steuerknüppel (2) für Kopilot gemäss Anspruch 3 oder 4, dadurch gekennzeichnet, dass er mit einer Rückholfeder (23) ausgerüstet ist, welche ihm eine elastische Haltekraft entweder im Verriegelungszustand oder nach der Entriegelung in Feststellposition verleiht.

6. Steuerknüppel (2) für Kopilot gemäss irgendeinem der Ansprüche 2 bis 5, dadurch gekennzeichnet, dass die zum mit dem Aussenring (14) fest verbundenen Teil (13) gehörende Schale (16) innenseitig kegelstumpfförmig ausgebildet ist, und dass der Steuerknüppel (2) des Kopiloten an seinem Ende eine Kappe (22) in entsprechender Form trägt, welche sich genau in den Boden der Schale (16) einfügt.

7. Steuerknüppel (2) für Kopilot gemäss irgendeinem der Ansprüche 2 bis 6, dadurch gekennzeichnet, dass der Riegel (19) beweglich ist und durch Eindrücken entgegen der Kraft einer Rückholfeder (20) in den Steuerknüppel (2) des Kopiloten zurückdrückbar ist.

FIG.1

FIG.2

FIG.3

FIG. 4